(19) Europäisches Patentamt
European Patent Office
Office européen des brevets

(11) **EP 3 767 608 A1**

(12) **EUROPEAN PATENT APPLICATION**
published in accordance with Art. 153(4) EPC

(43) Date of publication:
**20.01.2021 Bulletin 2021/03**

(51) Int Cl.:
**G09C 1/00** $^{(2006.01)}$

(21) Application number: **19766956.7**

(86) International application number:
**PCT/JP2019/007172**

(22) Date of filing: **26.02.2019**

(87) International publication number:
**WO 2019/176520 (19.09.2019 Gazette 2019/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.03.2018 JP 2018044026**

(71) Applicant: **NIPPON TELEGRAPH AND TELEPHONE CORPORATION**
**Chiyoda-ku, Tokyo 100-8116, (JP)**

(72) Inventor: **IKARASHI, Dai**
**Musashino-shi, Tokyo 180-8585 (JP)**

(74) Representative: **MERH-IP Matias Erny Reichl Hoffmann**
**Patentanwälte PartG mbB**
**Paul-Heyse-Strasse 29**
**80336 München (DE)**

(54) **SECRET CALCULATING DEVICE, SECRET CALCULATING METHOD, PROGRAM, AND RECORDING MEDIUM**

(57) A secure computation apparatus calculates a secret sharing value $\{si\} = \{x_i\}-1/2$ using a secret sharing value $\{x_i\}$ of $x_i$ (where $i = 0, 1, 2$), calculates a secret sharing value $\{y\} = \{4s_0s_1s_2\}+1/2$ by secure computation using the secret sharing value $\{si\}$ and outputs the secret sharing value $\{y\}$, and calculates a secret sharing value $\{y_r\} = \{4rs_0s_1s_2\}+\{r\}/2$ by secure computation using a secret sharing value $\{r\}$ of a random number r and the secret sharing value $\{si\}$ and outputs the secret sharing value $\{y_r\}$.

FIG. 2

EP 3 767 608 A1

**Description**

[TECHNICAL FIELD]

The present invention relates to secure computation techniques and, in particular, relates to a secure computation technique that can detect a fraudulent calculation.

[BACKGROUND ART]

The XOR $\alpha \in \{0, 1\}$ of $\alpha_0 \in \{0, 1\}$ and $\alpha_1 \in \{0, 1\}$ can be calculated by $\alpha = \alpha_0+\alpha_1-2\alpha_0\alpha_1$. Through the use of this formula, the XOR $\beta = \alpha_0(XOR)\alpha_1(XOR)\alpha_2 \in \{0, 1\}$ of $\alpha_0$, $\alpha_1$, and $\alpha_2 \in \{0, 1\}$ can be calculated as follows.

$$\alpha = \alpha_0+\alpha_1-2\alpha_0\alpha_1 \quad (1)$$

$$\beta = \alpha+\alpha_2-2\alpha\alpha_2 \quad (2)$$

A secure computation technique of performing an addition, a subtraction, and a multiplication while concealing values is known (see, for example, Non-patent Literature 1 and the like). For instance, by performing calculations of Formula (1) and Formula (2) by secure computation using secret sharing values $\{\alpha_0\}$, $\{\alpha_1\}$, and $\{\alpha_2\}$ obtained by concealing $\alpha_0$, $\alpha_1$, and $\alpha_2$, it is possible to obtain a secret sharing value $\{\beta\}$ of the XOR $\beta$ of $\alpha_0$, $\alpha_1$, and $\alpha_2$. By executing such secure computation in a plurality of secure computation apparatuses and collecting a predetermined number of results obtained by the secure computation apparatuses, it is possible to reconstruct the XOR $\beta$.

[PRIOR ART LITERATURE]

[NON-PATENT LITERATURE]

Non-patent Literature 1: Koji Chida, Koki Hamada, Dai Ikarashi, Katsumi Takahashi, "A Three-Party Secure Function Evaluation with Lightweight Verifiability Revisited", In CSS, 2010.

[SUMMARY OF THE INVENTION]

[PROBLEMS TO BE SOLVED BY THE INVENTION]

Since calculations using secret sharing values are performed in secure computation, it is difficult to detect that a fraudulent calculation has been performed. In particular, it is difficult to detect that a multiplication in secure computation has been performed in a fraudulent manner. A solution to this problem may be a method of performing, in addition to secure computation for an original calculation formula, secure computation for calculation by which a value obtained by multiplying the original calculation formula by a random number is obtained, and detecting a fraudulent calculation by using the results of these secure computations.

However, communications between the secure computation apparatuses are needed when a multiplication is performed in secure computation except when a constant multiplication is performed. Thus, the smaller the number of multiplications other than a constant multiplication, the lower the communication volume. When values obtained by multiplying Formula (1) and Formula (2) by a random number r are obtained by secure computation, it is necessary to perform three multiplications other than a constant multiplication for calculation of Formula (1) ($r\alpha_0$, $r\alpha_1$, $2r\alpha_0\alpha_1$) and further perform one multiplication other than a constant multiplication for calculation of Formula (2) ($r\alpha_2$). Therefore, communications for performing four multiplications in secure computation are needed.

The present invention reduces the communication volume when secure computation of the XOR of three values is performed such that a fraudulent calculation can be detected.

[MEANS TO SOLVE THE PROBLEMS]

In the present invention, i = 0, 1, 2 holds, a secret sharing value $\{s_i\} = \{x_i\}-1/2$ is calculated using a secret sharing value $\{x_i\}$ of $x_i$, a secret sharing value $\{y\} = \{4s_0s_1s_2\}+1/2$ is calculated by secure computation using the secret sharing value $\{si\}$ and is output, and a secret sharing value $\{y_r\} = \{4rs_0s_1s_2\}+\{r\}/2$ is calculated by secure computation using a secret sharing value $\{r\}$ of a random number r and the secret sharing value $\{s_i\}$ and is output.

[EFFECTS OF THE INVENTION]

This makes it possible to reduce the communication volume when secure computation of the XOR of three values is performed such that a fraudulent calculation can be detected.

[BRIEF DESCRIPTION OF THE DRAWINGS]

Fig. 1 is a block diagram illustrating the configuration of a secure computation system of an embodiment.
Fig. 2 is a block diagram illustrating the configuration of a secure computation apparatus of the embodiment.
Fig. 3 is a flow diagram for explaining a secure computation method of the embodiment.

[DETAILED DESCRIPTION OF THE EMBODIMENTS]

Hereinafter, embodiments of the present invention will be described.

[General outline]

First, the general outline of an embodiment will be described. In a secure computation apparatus of the embodiment, a subtraction unit first calculates a secret sharing value $\{s_i\} = \{x_i\}-1/2$ using a secret sharing value $\{x_i\}$ of $x_i \in \{0, 1\}$ and outputs the secret sharing value $\{s_i\}$. Here, i = 0, 1, 2 holds. For example, the subtraction unit calculates a secret sharing value $\{s_i\} = \{x_i\}-1/2$ mod q, where q is a positive integer. For instance, q is an integer (for example, a prime number) greater than or equal to 2 or greater than or equal to 3. Next, a first XOR operation unit calculates a secret sharing value

$$\{y\} = \{4s_0s_1s_2\}+1/2 \quad (3)$$

by secure computation using the secret sharing value $\{si\}$ and outputs the secret sharing value $\{y\}$. For example, the first XOR operation unit obtains a secret sharing value $\{4s_0s_1\}$ by secure computation using a secret sharing value $\{4s_0\}$ and a secret sharing value $\{s_1\}$ and obtains a secret sharing value $\{4s_0s_1s_2\}$ by secure computation using the secret sharing value $\{4s_0s_1\}$ and a secret sharing value $\{s_2\}$. Next, a second XOR operation unit calculates a secret sharing value

$$\{y_r\} = \{4rs_0s_1s_2\}+\{r\}/2 \quad (4)$$

by secure computation using a secret sharing value $\{r\}$ of a random number r and the secret sharing value $\{si\}$ and outputs the secret sharing value $\{y_r\}$. For example, the second XOR operation unit obtains a secret sharing value $\{4rs_0\}$ by secure computation using a secret sharing value $\{4r\}$ and a secret sharing value $\{s_0\}$, obtains a secret sharing value $\{4rs_0s_1\}$ by secure computation using the secret sharing value $\{4rs_0\}$ and the secret sharing value $\{s_1\}$, and obtains a secret sharing value $\{4rs_0s_1s_2\}$ by secure computation using the secret sharing value $\{4rs_0s_1\}$ and the secret sharing value $\{s_2\}$. It is to be noted that any secure computation scheme can be used; for example, a scheme described in Non-patent Literature 1 can be used. As described above, $s_i$, y, and $y_r$ are elements of a set for which four arithmetic operations are defined. The set may be any set as long as four arithmetic operations are defined therefor. One example of such a set is a finite field $F_p$ of order p. p is an integer greater than or equal to 2. An example of p is an integer greater than or equal to 3 and, for instance, p is a prime number greater than or equal to 3. Secret sharing values of $s_i \in F_p$, $y \in F_p$, and $y_r \in F_p$ are expressed as $\{s_i\} \in \{F_p\}$, $\{y\}$

$\in \{F_p\}$, and $\{y_r\} \in \{F_p\}$.

Here, $y = 4s_0s_1s_2+1/2$ and $s_i = x_i-1/2$ are satisfied, and such y is the XOR of $x_0$, $x_1$, and $x_2$: $y = x_0(XOR)x_1(XOR)x_2$. A truth table for them is shown below.

[Table 1]

| $x_0$ | $x_1$ | $x_2$ | y |
|-------|-------|-------|---|
| 0 | 0 | 0 | 0 |
| 0 | 1 | 0 | 1 |
| 0 | 0 | 1 | 1 |
| 0 | 1 | 1 | 0 |
| 1 | 0 | 0 | 1 |
| 1 | 1 | 0 | 0 |
| 1 | 0 | 1 | 0 |
| 1 | 1 | 1 | 1 |

That is, by $y = 4s_0s_1s_2+1/2$, it is possible to obtain the same result as that obtained by Formulae (1) and (2) described earlier when $\alpha = x = x_0+x_1-2x_0x_1$, $\beta = y$, $\alpha_0 = x_0$, $\alpha_1 = x_1$, and $\alpha_2 = x_2$. While the number of multiplications other than a constant multiplication, which are needed to calculate a secret sharing value $\{y\}$ in accordance with Formulae (1) and (2), is two ($\{2x_0x_1\}$ and $\{2xx_2\}$) and the number of multiplications other than a constant multiplication, which are needed to calculate $\{y_r\}$ in accordance with Formulae (1) and (2), is five ($\{rx_0\}$, $\{rx_1\}$, $\{2rx_0x_1\}$, $\{rx_2\}$, and $\{2rxx_2\}$), the number of multiplications other than a constant multiplication, which are needed to calculate a secret sharing value $\{y\}$ using Formula (3), is two ($\{4s_0s_1\}$ and $\{4s_0s_1s_2\}$) and the number of multiplications other than a constant multiplication, which are needed to calculate $\{y_r\}$ using Formula (4), is three ($\{4rs_0\}$, $\{4rs_0s_1\}$, and $\{4rs_0s_1s_2\}$). Thus, by performing secure computation using Formulae (3) and (4), it is possible to reduce the number of multiplications other than a constant multiplication by two as compared with performing secure computation in accordance with Formulae (1) and (2). When a multiplication other than a constant multiplication is performed in secure computation, communications have to be performed between secure computation apparatuses. Therefore, the present scheme that reduces the number of multiplications other than a constant multiplication can reduce the communication volume as compared with performing secure computation in accordance with Formulae (1) and (2).

The properties of the values $x_0$, $x_1$, $x_2 \in \{0, 1\}$ are unessential. For example, $x_0$, $x_1$, $x_2 \in \{0, 1\}$ may be random numbers, other operation results, or input values. The applications for which a secret sharing value pair $\{y\}$ and $\{y_r\}$ is used are also unessential. The technique of the embodiment may be used for any application as long as a secret sharing value $\{y\}$ of the XOR y of $x_0$, $x_1$, and

$x_2$: $y = x_0 (XOR) x_1 (XOR) x_2$ and a secret sharing value $\{y_r\}$ for detecting that the secret sharing value $\{y\}$ has been calculated in a fraudulent manner are used in secure computation.

For instance, $j = 0, 1, 2$ may hold, the above-described secure computation apparatus may be a secure computation apparatus $P_j$ which is any one of three secure computation apparatuses $P_0$, $P_1$, and $P_2$, a secret sharing value $\{x_i\}$ for the secure computation apparatus $P_j$ may be $\{x_i\}_j$, a random number obtaining unit of the secure computation apparatus $P_j$ may generate a secret sharing value $\{w\}^B_j = (w_j, w_{(j+1)\mod 3})$ that satisfies $w = w_0 + w_1 + w_2$ mod 2 for a random number $w \in \{0, 1\}$, a subtraction unit may calculate a secret sharing value $\{s_i\}$ = $\{x_i\} - 1/2$ using, as $\{x_i\}$ (where $i = 0, 1, 2$), $\{x_j\}_j = (w_j, 0)$, $\{x_{(j+1)\mod 3}\}_j = (0, w_{(j+1)\mod 3})$, and $\{x_{(j+2)\mod 3}\}_j = (0, 0)$, a first XOR operation unit may calculate a secret sharing value $\{y\} = \{4s_0s_1s_2\}+1/2$ by secure computation using the secret sharing value $\{s_i\}$, and a second XOR operation unit may calculate a secret sharing value $\{y_r\}$ = $\{4rs_0s_1s_2\}+\{r\}/2$ by secure computation using a secret sharing value $\{r\}$ and the secret sharing value $\{s_i\}$. Here, $\{x_j\}_j$, $\{x_{(j+1)\mod 3}\}_j$, and $\{x_{(j+2)\mod 3}\}_j$ for $j = 0, 1, 2$ are as follows.

$\{x_0\}_0 = (w_0, 0)$, $\{x_0\}_1 = (0,0)$, $\{x_0\}_2 = (0, w_0)$
$\{x_1\}_0 = (0, w_1)$, $\{x_1\}_1 = (w_1, 0)$, $\{x_1\}_2 = (0, 0)$
$\{x_2\}_0 = (0, 0)$, $\{x_2\}_1 = (0, w_2)$, $\{x_2\}_2 = (w_2, 0)$

$w_0, w_1, w_2 \in \{0, 1\}$ are subshares of secret sharing values which are obtained by performing secret sharing of a random number $w$ over mod 2 in accordance with the additive secret sharing scheme of a (2, 3) threshold secret sharing scheme (see, for example, Non-patent Literature 1 and the like). A (k, n) threshold secret sharing scheme (which is also called a "k-of-n threshold secret sharing scheme") refers to a secret sharing scheme in which, by using k different secret sharing values of n secret sharing values, plaintext can be reconstructed; however, information on the plaintext cannot be obtained at all from less than k secret sharing values which are different from each other. Here, $k \leq n$ holds and k and n are integers greater than or equal to 2. Although the random number $w$ is concealed from each secure computation apparatus $P_j$ (where $j = 0, 1, 2$), the secure computation apparatus $P_j$ can obtain subshares $w_j$ and $w_{(j+1)\mod 3}$ by generating a random number $w_j \in \{0, 1\}$ on its own and transmitting the random number $w_j$ to each secure computation apparatus $P_{(j-1)\mod 3}$. The random number $w = w_0 + w_1 + w_2$ mod 2 is determined in accordance with the random numbers $w_0$, $w_1$, and $w_2$ generated by the secure computation apparatus $P_j$.

When $\{x_j\}_j = (w_j, 0)$, $\{x_{(j+1)\mod 3}\}_j = (0, w_{(j+1)\mod 3})$, and $\{x_{(j+2)\mod 3}\}_j = (0, 0)$ and $s_i \in F_p$, $y \in F_p$, and $y_r \in F_p$, the subtraction unit calculates a secret sharing value $\{si\}$ treating $w_j \in \{0, 1\}$ and $w_{(j+1)\mod 3} \in \{0, 1\}$ as elements of a finite field $F_p$. For example, when a set of all the elements of the finite field $F_p$ is $\{\varphi_0, ..., \varphi_{p-1}\}$, the subtraction unit calculates a secret sharing value $\{s_i\}$ on the finite field $F_p$ treating 0 as an element $\varphi_0$ of the

finite field $F_p$ and 1 as an element $\varphi_1$ of the finite field $F_p$. $\{y\}$ is a secret sharing value $\{w\} \in \{F_p\}$ that is obtained when secret sharing of the random number $w = w_0 + w_1 + w_2$ mod 2 is performed on the finite field $F_p$. That is, such processing which is performed by the secure computation apparatus is processing to convert a secret sharing value $\{w\}^B_j$, which is obtained by performing secret sharing of a random number $w$ over mod 2 in accordance with the additive secret sharing scheme of the (2, 3) threshold secret sharing scheme, to a pair (a secret random number pair) of a secret sharing value $\{y\} \in \{F_p\}$ and a secret sharing value $\{y_r\} \in F_p$ on the finite field $F_p$ of the random number $w$.

By using the above-described $\{r\}$, $\{y\}$, and $\{y_r\}$ as checksums, it is possible to perform ex post facto verification whether $\{y\}$ has been correctly calculated. For example, a secret sharing value (for instance, $\{y_r = ry\}$) of information indicating whether or not $y_r = ry$ is satisfied may be generated by secure computation using $\{r\}$, $\{y\}$, and $\{y_r\}$ (see, for example, International Publication No. WO 2014/112548 (Reference Literature 1) and the like) or a verification apparatus may reconstruct r, y, and $y_r$ from $\{r\}$, $\{y\}$, and $\{y_r\}$ and verify whether or not $y_r = ry$ is satisfied. In the latter case, the verification apparatus accepts input of the above-described secret sharing value $\{y\} = \{4s_0s_1s_2\}+1/2$, secret sharing value $\{y_r\}$ = $\{4rs_0s_1s_2\}+\{r\}/2$, and secret sharing value $\{r\}$, obtains y $= 4s_0s_1s_2 + 1/2$, $y_r = 4rs_0s_1s_2 + r/2$, and r by reconstructing the secret sharing value $\{y\}$, the secret sharing value $\{y_r\}$, and the secret sharing value $\{r\}$, obtains $y_r' = ry$ using r and y, and produces output indicating that verification has been successfully made if $y_r' = y_r$ and produces output indicating that verification has not been successfully made if $y_r' \neq y_r$.

It is to be noted that the secret sharing values $\{y\}$, $\{y_r\}$, and $\{r\}$ are usually secret sharing values that conform to the same secret sharing scheme (for instance, the additive secret sharing scheme). However, since conversion of a scheme to which a secret sharing value conforms is possible by a publicly known technique (see Reference Literatures 2 to 6 and the like), all of the secret sharing values $\{y\}$, $\{y_r\}$, and $\{r\}$ do not have to be secret sharing values that conform to the same secret sharing scheme. Moreover, $\{y\}$ and $\{y_r\}$ obtained in the above-described manner may be converted to secret sharing values that conform to another scheme.

Reference Literature 2: Ronald Cramer, Ivan Damgard, and Yuval Ishai, "Share conversion, pseudorandom secret-sharing and applications to secure distributed computing," Theory of Cryptography (2005): 342-362
Reference Literature 3: Japanese Patent Application Laid Open No. 2016-173533
Reference Literature 4: Japanese Patent Application Laid Open No. 2016-173532
Reference Literature 5: Japanese Patent Application Laid Open No. 2016-173531

Reference Literature 6: Japanese Patent Application Laid Open No. 2016-156853

[First embodiment]

A first embodiment will be described in detail by using the drawings.

<Configuration>

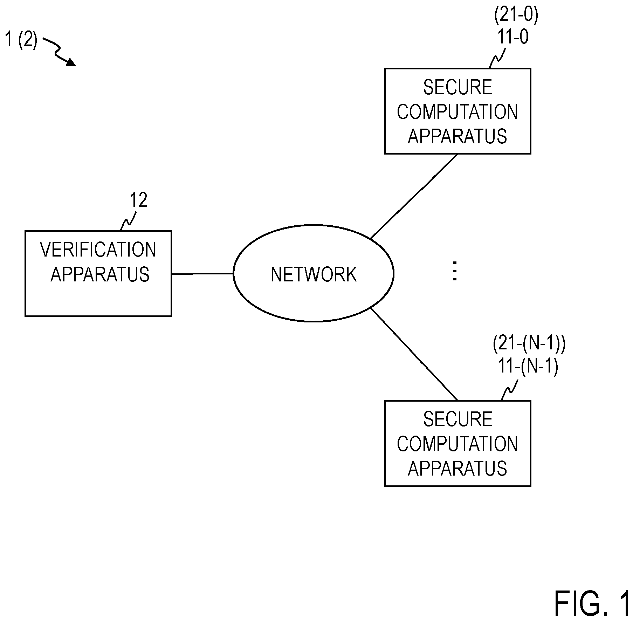

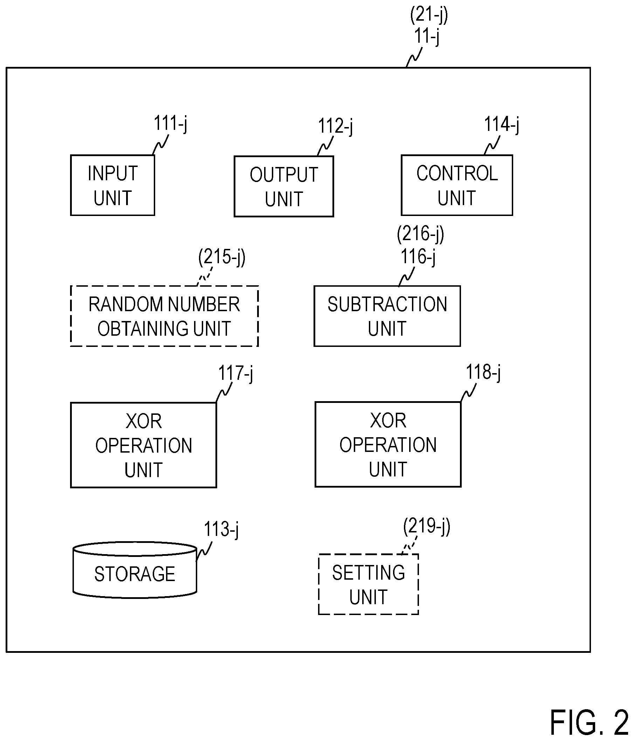

As illustrated in Fig. 1, a secure computation system 1 of the embodiment includes N secure computation apparatuses 11-0, ..., 11-(N-1) and a verification apparatus 12, which are configured so that they can communicate with each other through a network. Here, N is an integer greater than or equal to 2. For example, N is an integer greater than or equal to 3 and one example of N is N = 3. As illustrated in Fig. 2, a secure computation apparatus 11-j (where j = 0, ..., N-1) includes an input unit 111-j, an output unit 112-j, a storage 113-j, a control unit 114-j, a subtraction unit 116-j, and XOR operation units 117-j and 118-j. The secure computation apparatus 11-j executes each processing under the control of the control unit 114-j. The data obtained in each unit of the secure computation apparatus 11-j is stored in the storage 113-j one by one and is read therefrom when necessary and used for another processing.

<Secure computation processing>

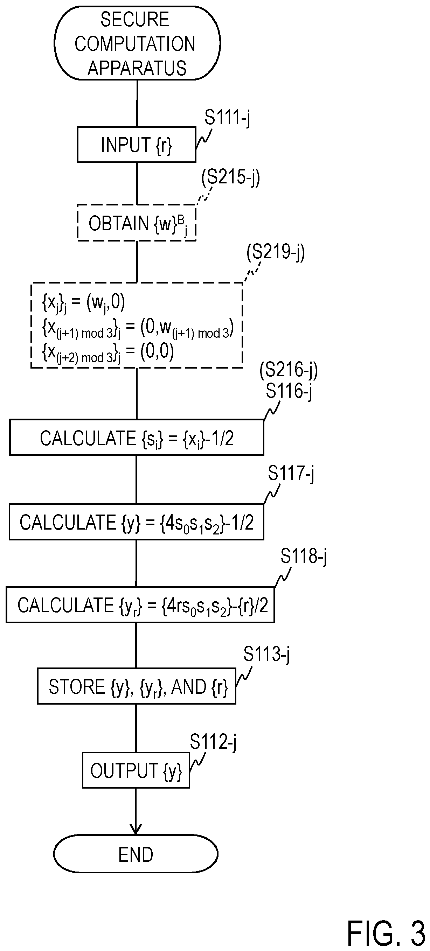

Secure computation processing which is performed by the secure computation apparatus 11-j will be described using Fig. 3. See, for example, Non-patent Literature 1 and the like for details of a secret sharing scheme and a secure computation scheme.

A secret sharing value $\{r\} \in \{F_p\}$ of a random number $r \in F_p$ on a finite field $F_p$ is input to the input unit 111-j of each secure computation apparatus 11-j (where j = 0, ..., N-1). It is to be noted that a secret sharing value of a value $\gamma$ corresponding to one secure computation apparatus 11-j is different from a secret sharing value of the value $\gamma$ corresponding to another secure computation apparatus 11-j; for the sake of simplification of description, a secret sharing value of a value $\gamma$ is simply written as $\{\gamma\}$ unless otherwise specified. It is to be noted that, when expressly stating that a secret sharing value is a secret sharing value corresponding to each secure computation apparatus 11-j, a secret sharing value corresponding to each secure computation apparatus 11-j is written as $\{\gamma\}_j$. In the present embodiment, what was obtained by performing secret sharing of a random number r on a finite field $F_p$ in accordance with the additive secret sharing scheme is $\{r\}$; however, this is not an essential matter in the present invention. The secret sharing value $\{r\}$ of the present embodiment is the secret sharing value generated outside each secure computation apparatus 11-j. The value of the random number r is concealed from each secure computation apparatus 11-j. For example, the verification apparatus 12 may generate a secret sharing value $\{r\}$ of a random number r without allowing the value of the random number r to be known by each secure computation apparatus 11-j and transmit the secret sharing value $\{r\}$ to each secure computation apparatus 11-j. Where the secret sharing value $\{r\}$ is created is also not an essential matter in the present invention. The secret sharing value $\{r\}$ is stored in the storage 113-j of each secure computation apparatus 11-j (Step S111-j).

A secret sharing value $\{x_i\}$ of $x_i \in \{0, 1\}$ is stored in the storage 113-j (where i = 0, 1, 2). $x_i$ may be any value. The secret sharing value $\{x_i\}$ may be the secret sharing value input from outside the secure computation apparatus 11-j, the secret sharing value generated inside the secure computation apparatus 11-j, or the secret sharing value generated by cooperation between the secure computation apparatus 11-j and a secure computation apparatus 11-j" (where j" $\in \{0, ..., N-1\}$ and j" $\neq$ j) outside the secure computation apparatus 11-j. The subtraction unit 116-j reads the secret sharing value $\{x_i\}$ from the storage 113-j, calculates a secret sharing value $\{s_i\}$ = $\{x_i\}$-1/2 by secure computation using the secret sharing value $\{x_i\}$, and outputs the secret sharing value $\{s_i\}$ (Step S116-j).

The XOR operation unit 117-j (the first XOR operation unit) calculates a secret sharing value $\{y\}$ = $\{4s_0 s_1 s_2\}$+1/2 by secure computation using the secret sharing value $\{s_i\}$ output from the subtraction unit 116-j and outputs the secret sharing value $\{y\}$. For example, the XOR operation unit 117-j obtains a secret sharing value $\{4s_0 s_1\}$ by secure computation using a secret sharing value $\{4s_0\}$ and a secret sharing value $\{s_1\}$, obtains a secret sharing value $\{4s_0 s_1 s_2\}$ by secure computation using the secret sharing value $\{4s_0 s_1\}$ and a secret sharing value $\{s_2\}$, and obtains a secret sharing value $\{y\}$ using the secret sharing value $\{4s_0 s_1 s_2\}$ and 1/2 and outputs the secret sharing value $\{y\}$. Communications between the secure computation apparatuses 11-0 to 11-(N-1) are needed for these secure computations. On the other hand, communications are not needed for calculation of the secret sharing value $\{4s_0\}$. That is, the XOR operation unit 117-j of each secure computation apparatus 11-j can calculate the secret sharing value $\{4s_0\}$ using the secret sharing value $\{s_i\}$ without performing communication (Step S117-j).

The XOR operation unit 118-j (the second XOR operation unit) calculates a secret sharing value $\{y_r\}$ = $\{4rs_0 s_1 s_2\}$+$\{r\}$/2 by secure computation using the secret sharing value $\{si\}$ output from the subtraction unit 116-j and the secret sharing value $\{r\}$ read from the storage 113-j and outputs the secret sharing value $\{y_r\}$. For example, the XOR operation unit 118-j obtains a secret sharing value $\{4rs_0\}$ by secure computation using a secret sharing value $\{4r\}$ and a secret sharing value $\{s_0\}$, obtains a secret sharing value $\{4rs_0 s_1\}$ by secure computation using the secret sharing value $\{4rs_0\}$ and the secret sharing value $\{s_1\}$, obtains a secret sharing value $\{4rs_0 s_1 s_2\}$ by secure computation using the secret sharing value

$\{4rs_0s_1\}$ and the secret sharing value $\{s_2\}$, and obtains a secret sharing value $\{y_r\}$ using the secret sharing value $\{4rs_0s_1s_2\}$ and 1/2 and outputs the secret sharing value $\{y_r\}$. Communications between the secure computation apparatuses 11-0 to 11-(N-1) are needed for these secure computations. On the other hand, communications are not needed for calculation of the secret sharing value $\{4r\}$. That is, the XOR operation unit 118-j of each secure computation apparatus 11-j can calculate the secret sharing value $\{4r\}$ using the secret sharing value $\{r\}$ without performing communication (Step S118-j).

The secret sharing values $\{y\}$, $\{y_r\}$, and $\{r\}$ are associated with each other and stored in the storage 113-j (Step S113-j). The output unit 112-j outputs the secret sharing value $\{y\}$ (Step S112-j). The secret sharing value $\{y\}$ is used for other arbitrary secure computations.

When verification that the secret sharing value $\{y\}$ has been properly calculated is performed, the secret sharing values $\{y\}$, $\{y_r\}$, and $\{r\}$ are read from the storage 113-j and verification of consistency of these values is performed. For example, the secure computation apparatus 11-j calculates a secret sharing value $\{ry-y_r\}$ by secure computation using the secret sharing values $\{y\}$, $\{y_r\}$, and $\{r\}$ and outputs the secret sharing value $\{ry-y_r\}$ (see Reference Literature 1). The secure computation apparatus 11-j transmits the secret sharing value $\{ry-y_r\}$ to the verification apparatus 12. The verification apparatus 12 reconstructs $ry-y_r$ from a predetermined number of or more secret sharing values $\{ry-y_r\}$, each having been transmitted from the secure computation apparatus 11-j, and produces output indicating that verification has been successfully made if $ry-y_r = 0$ and produces output indicating that verification has not been successfully made if $ry-y_r \# 0$. Alternatively, the secure computation apparatus 11-j transmits the secret sharing values $\{y\}$, $\{y_r\}$, and $\{r\}$ to the verification apparatus 12. The verification apparatus 12 reconstructs $y$ from a predetermined number of or more secret sharing values $\{y\}$, each having been transmitted from the secure computation apparatus 11-j, reconstructs $y_r$ from a predetermined number of or more secret sharing values $\{y_r\}$, each having been transmitted from the secure computation apparatus 11-j, and reconstructs $r$ from a predetermined number of or more secret sharing values $\{r\}$, each having been transmitted from the secure computation apparatus 11-j, and produces output indicating that verification has been successfully made if $ry-y_r = 0$ is satisfied and produces output indicating that verification has not been successfully made if $ry-y_r \neq 0$ is satisfied.

[Second embodiment]

A second embodiment will be described. In the present embodiment, processing will be described, the processing to convert a secret sharing value $\{w\}^B_j$, which is obtained by performing secret sharing of a random number $w$ over mod 2 in accordance with the additive secret sharing scheme of the (2, 3) threshold secret sharing scheme, to a pair (a secret random number pair) of a secret sharing value $\{y\} \in \{F_p\}$ and a secret sharing value $\{y_r\} \in \{F_p\}$ on a finite field $F_p$ of the random number $w$.

<Configuration>

As illustrated in Fig. 1, a secure computation system 2 of the embodiment includes three secure computation apparatuses 21-0, 21-1, and 21-2 and a verification apparatus 12, which are configured so that they can communicate with each other through a network. As illustrated in Fig. 2, a secure computation apparatus 21-j (where j = 0, 1, 2) includes an input unit 111-j, an output unit 112-j, a storage 113-j, a control unit 114-j, a random number obtaining unit 215-j, a subtraction unit 216-j, XOR operation units 117-j and 118-j, and a setting unit 219-j. The secure computation apparatus 21-j executes each processing under the control of the control unit 114-j. The data obtained in each unit of the secure computation apparatus 21-j is stored in the storage 113-j one by one and is read therefrom when necessary and used for another processing.

<Secure computation processing>

Secure computation processing which is performed by the secure computation apparatus 21-j (where j = 0, 1, 2) will be described using Fig. 3. In the following description, a difference from the first embodiment will be mainly described and explanations of matters common to the first and second embodiments will be simplified.

A secret sharing value $\{r\} \in \{F_p\}$ of a random number $r \in F_p$ on a finite field $F_p$ is input to the input unit 111-j of each secure computation apparatus 21-j. The secret sharing value $\{r\}$ of the present embodiment is a secret sharing value that conforms to the additive secret sharing scheme of the (2, 3) threshold secret sharing scheme, for example. The secret sharing value $\{r\}$ is stored in the storage 113-j of each secure computation apparatus 21-j (Step S111-j).

The random number obtaining unit 215-j of each secure computation apparatus 21-j obtains a secret sharing value $\{w\}^B_j = (w_j, w_{(j+1) \bmod 3})$ that satisfies $w = w_0+w_1+w_2 \bmod 2$ for a random number $w \in \{0, 1\}$ and outputs the secret sharing value $\{w\}^B_j$. That is, the random number obtaining unit 215-0 obtains $\{w\}^B_0 = (w_0, w_1)$ and outputs $\{w\}^B_0$, the random number obtaining unit 215-1 obtains $\{w\}^B_1 = (w_1, w_2)$ and outputs $\{w\}^B_1$, and the random number obtaining unit 215-2 obtains $\{w\}^B_2 = (w_2, w_0)$ and outputs $\{w\}^B_2$. It is to be noted that this processing is performed with the random number $w$ concealed from each secure computation apparatus 21-j. For example, each random number obtaining unit 215-j generates a random number $w_j \in \{0, 1\}$ and transmits the random number $w_j$ to a secure computation apparatus 21-((j-1) mod 3) from the output unit 112-j. A random number $w_{(j+1) \bmod 3}$ transmitted from a secure computation apparatus 21-((j+1) mod 3) is input to the input unit 111-j of the secure computation apparatus 21-j and transmitted to the random number obtaining unit 215-j. By the above processing, the random number obtaining unit 215-j obtains $\{w\}^B_j = (w_j, w_{(j+1) \bmod 3})$ (Step S215-j).

The setting unit 219-j obtains, using subshares $w_j$ and $w_{(j+1) \bmod 3} \in \{0, 1\}$ of the secret sharing value $\{w\}^B_j = (w_j, w_{(j+1) \bmod 3})$ as input, $\{x_j\}_j = (w_j, 0)$, $\{x_{(j+i) \bmod 3}\}_j = (0, w_{(j+1) \bmod 3})$, and $\{x_{(j+2) \bmod 3}\}_j = (0, 0)$ and outputs $\{x_j\}_j$, $\{x_{(j+i) \bmod 3}\}_j$, and $\{x_{(j+2) \bmod 3}\}_j$ (Step S219-j).

$\{x_j\}_j = (w_j, 0)$, $\{x_{(j+1) \bmod 3}\}_j = (0, w_{(j+1) \bmod 3})$, and $\{x_{(j+2) \bmod 3}\}_j = (0, 0)$ are input to the subtraction unit 216-j as $\{x_i\}$ (where i = 0, 1, 2). That is, $\{x_0\} = \{x_0\}_0 = (w_0, 0)$, $\{x_1\} = \{x_1\}_0 = (0, w_1)$, and $\{x_2\} = \{x_2\}_0 = (0, 0)$ are input to the subtraction unit 216-0. $\{x_0\} = \{x_0\}_1 = (0, 0)$, $\{x_1\} = \{x_1\}_1 = (w_1, 0)$, and $\{x_2\} = \{x_2\}_1 = (0, w_2)$ are input to the subtraction unit 216-1. $\{x_0\} = \{x_0\}_2 = (0, w_0)$, $\{x_1\} = \{x_1\}_2 = (0, 0)$, and $\{x_2\} = \{x_2\}_2 = (w_2, 0)$ are input to the subtraction unit 216-2. The subtraction unit 216-j calculates a secret sharing value $\{s_i\} = \{x_i\} - 1/2 \in \{F_p\}$ using the input $\{x_i\}$ and outputs the secret sharing value $\{si\}$. For example, when $\{x_i\}$ is what was obtained by performing secret sharing of $x_i$ to obtain three secret sharing values $(x_{i,0}, x_{i,1})$, $(x_{i,1}, x_{i,2})$, and $(x_{i,2}, x_{i,0})$ that satisfy $x_i = x_{i,0} + x_{i,1} + x_{i,2}$, a secret sharing value $\{s_i\}$ corresponding to the secret sharing value $(x_{i,0}, x_{i,1})$, a secret sharing value $\{s_i\}$ corresponding to the secret sharing value $(x_{i,1}, x_{i,2})$, and a secret sharing value $\{s_i\}$ corresponding to the secret sharing value $(x_{i,2}, x_{i,0})$ respectively are $(x_{i,0} - 1/2, x_{i,1})$, $(x_{i,1}, x_{i,2})$, and $(x_{i,2}, x_{i,0} - 1/2)$, for example. In addition to those described above, a secret sharing value $\{s_i\}$ corresponding to the secret sharing value $(x_{i,0}, x_{i,1})$, a secret sharing value $\{s_i\}$ corresponding to the secret sharing value $(x_{i,1}, x_{i,2})$, and a secret sharing value $\{s_i\}$ corresponding to the secret sharing value $(x_{i,2}, x_{i,0})$ may respectively be $(x_{i,0} - 1/6, x_{i,1} - 1/6)$, $(x_{i,1} - 1/6, x_{i,2} - 1/6)$, and $(x_{i,2} - 1/6, x_{i,0} - 1/6)$, for example. The former makes faster processing possible. In this case, the subtraction unit 216-j calculates a secret sharing value $\{si\}$ treating $w_j \in \{0, 1\}$ and $w_{(j+1) \bmod 3} \in \{0, 1\}$ as elements of the finite field $F_p$ (Step S216-j).

The XOR operation unit 117-j (the first XOR operation unit) calculates a secret sharing value $\{y\} = \{4s_0 s_1 s_2\} + 1/2 \in \{F_p\}$ by secure computation using the secret sharing value $\{s_i\} \in \{F_p\}$ output from the subtraction unit 216-j and outputs the secret sharing value $\{y\}$ (Step S117-j).

The XOR operation unit 118-j (the second XOR operation unit) calculates a secret sharing value $\{y_r\} = \{4r s_0 s_1 s_2\} + \{r\}/2 \in \{F_p\}$ by secure computation using the secret sharing value $\{si\}$ output from the subtraction unit 116-j and the secret sharing value $\{r\}$ read from the storage 113-j and outputs the secret sharing value $\{y_r\}$ (Step S118-j).

The secret sharing values $\{y\}$, $\{y_r\}$, and $\{r\}$ are associated with each other and stored in the storage 113-j (Step S113-j). The output unit 112-j outputs the secret sharing value $\{y\}$ (Step S112-j). The secret sharing value

$\{y\} \in \{F_p\}$ is a secret sharing value of a random number y on the finite field $F_p$. $\{y\}$ may be converted to a secret sharing value that conforms to another secret sharing scheme (for example, Shamir's secret sharing scheme) and output.

When verification that the secret sharing value $\{y\}$ has been properly calculated is performed, the secret sharing values $\{y\}$, $\{y_r\}$, and $\{r\}$ are read from the storage 113-j and verification of consistency of these values is performed.

[Modifications and so forth]

It is to be noted that the present invention is not limited to the above-described embodiments. For example, in the above-described embodiments, a secret sharing value $\{r\}$ of a random number $r \in F_p$ is input to each secure computation apparatus 11-j. Alternatively, each secure computation apparatus 11-j may generate its own secret sharing value $\{r\}$; however, a random number r has to be concealed from each secure computation apparatus 11-j. Such a method is well-known and any method may be used. For instance, secure computation apparatuses 11-0, ..., 11-(N-1) can generate a secret sharing value $\{r\}$ in cooperation with each other. In one example, each secure computation apparatus 11-j' calculates a secret sharing value $\{r_{j'}\}_j \in [F_p]$ of a random number $r_{j'}$ and transmits the secret sharing value $\{r_{j'}\}_j$ to a secure computation apparatus 11-j (where j = 0, ..., N-1, j' = 0, ..., N-1, and j' ≠ j), and each secure computation apparatus 11-j obtains $\{r\} = \{r_0 + ... + r_{N-1}\}_j$ by secure computation using secret sharing values $\{r_0\}_j$, ..., $\{r_{N-1}\}_j$.

The above-described various kinds of processing may be executed, in addition to being executed in chronological order in accordance with the descriptions, in parallel or individually depending on the processing power of an apparatus that executes the processing or when necessary. In addition, it goes without saying that changes may be made as appropriate without departing from the spirit of the present invention.

The above-described each apparatus is embodied by execution of a predetermined program by a general- or special-purpose computer having a processor (hardware processor) such as a central processing unit (CPU), memories such as random-access memory (RAM) and read-only memory (ROM), and the like, for example. The computer may have one processor and one memory or have multiple processors and memories. The program may be installed on the computer or prerecorded on the ROM and the like. Also, some or all of the processing units may be embodied using an electronic circuit that implements processing functions without using programs, rather than an electronic circuit (circuitry) that implements functional components by loading of programs like a CPU. An electronic circuit constituting a single apparatus may include multiple CPUs.

When the above-described configurations are implemented by a computer, the processing details of the functions supposed to be provided in each apparatus are described by a program. As a result of this program being executed by the computer, the above-described processing functions are implemented on the computer. The program describing the processing details can be recorded on a computer-readable recording medium. An example of the computer-readable recording medium is a non-transitory recording medium. Examples of such a recording medium include a magnetic recording apparatus, an optical disk, a magneto-optical recording medium, and semiconductor memory.

The distribution of this program is performed by, for example, selling, transferring, or lending a portable recording medium such as a DVD or a CD-ROM on which the program is recorded. Furthermore, a configuration may be adopted in which this program is distributed by storing the program in a storage apparatus of a server computer and transferring the program to other computers from the server computer via a network.

The computer that executes such a program first, for example, temporarily stores the program recorded on the portable recording medium or the program transferred from the server computer in a storage apparatus thereof. At the time of execution of processing, the computer reads the program stored in the storage apparatus thereof and executes the processing in accordance with the read program. As another mode of execution of this program, the computer may read the program directly from the portable recording medium and execute the processing in accordance with the program and, furthermore, every time the program is transferred to the computer from the server computer, the computer may sequentially execute the processing in accordance with the received program. A configuration may be adopted in which the transfer of a program to the computer from the server computer is not performed and the above-described processing is executed by so-called application service provider (ASP)-type service by which the processing functions are implemented only by an instruction for execution thereof and result acquisition.

Instead of executing a predetermined program on the computer to implement the processing functions of the present apparatuses, at least some of the processing functions may be implemented by hardware.

[DESCRIPTION OF REFERENCE NUMERALS]

1, 2 secure computation system
11-j, 21-j secure computation apparatus

**Claims**

1. A secure computation apparatus, wherein
   $i = 0, 1, 2$ holds, and
   the secure computation apparatus comprises:

   a subtraction unit that calculates a secret sharing value $\{s_i\} = \{x_i\}-1/2$ using a secret sharing value $\{x_i\}$ of $x_i \in \{0, 1\}$;
   a first XOR operation unit that calculates a secret sharing value $\{y\} = \{4s_0s_1s_2\}+1/2$ by secure computation using the secret sharing value $\{s_i\}$ and outputs the secret sharing value $\{y\}$; and
   a second XOR operation unit that calculates a secret sharing value $\{y_r\} = \{4rs_0s_1s_2\}+\{r\}/2$ by secure computation using a secret sharing value $\{r\}$ of a random number $r$ and the secret sharing value $\{s_i\}$ and outputs the secret sharing value $\{y_r\}$.

2. The secure computation apparatus according to Claim 1, wherein
   $j = 0, 1, 2$ holds, the secure computation apparatus is a secure computation apparatus $P_j$ which is any one of three secure computation apparatuses $P_0$, $P_1$, and $P_2$, and the secret sharing value $\{x_i\}$ for the secure computation apparatus $P_j$ is $\{x_i\}_j$,
   the secure computation apparatus further comprises a random number obtaining unit that obtains a secret sharing value $\{w\}^B_j = (w_j, w_{(j+1) \bmod 3})$ that satisfies $w = w_0+w_1+w_2 \bmod 2$ for a random number $w \in \{0, 1\}$, and
   $\{x_j\}_j = (w_j, 0)$, $\{x_{(j+1) \bmod 3}\}_j = (0, w_{(j+1) \bmod 3})$, and $\{x_{(j+2) \bmod 3}\}_j = (0, 0)$ hold.

3. The secure computation apparatus according to Claim 2, wherein
   the subtraction unit calculates the secret sharing value $\{s_i\}$ treating $w_j$ and $w_{(j+1) \bmod 3}$ as elements of a finite field, and
   the secret sharing value $\{y\}$ is a secret sharing value that is obtained when secret sharing of the random number $w$ is performed on the finite field.

4. The secure computation apparatus according to any one of Claims 1 to 3, wherein
   the first XOR operation unit obtains a secret sharing value $\{4s_0s_1\}$ by secure computation using a secret sharing value $\{4s_0\}$ and a secret sharing value $\{s_1\}$ and obtains a secret sharing value $\{4s_0s_1s_2\}$ by secure computation using the secret sharing value $\{4s_0s_1\}$ and a secret sharing value $\{s_2\}$, and
   the second XOR operation unit obtains a secret sharing value $\{4rs_0\}$ by secure computation using a secret sharing value $\{4r\}$ and a secret sharing value $\{s_0\}$, obtains a secret sharing value $\{4rs_0s_1\}$ by secure computation using the secret sharing value $\{4rs_0\}$ and the secret sharing value $\{s_1\}$, and obtains a secret sharing value $\{4rs_0s_1s_2\}$ by secure computation using the secret sharing value $\{4rs_0s_1\}$ and the secret sharing value $\{s_2\}$.

5. A secure computation method of a secure computation apparatus, wherein

i = 0, 1, 2 holds, and
the secure computation method comprises:

> a subtraction step in which a subtraction unit calculates a secret sharing value $\{s_i\} = \{x_i\}-1/2$ using a secret sharing value $\{x_i\}$ of $x_i \in \{0, 1\}$;
> a first XOR operation step in which a first XOR operation unit calculates a secret sharing value $\{y\} = \{4s_0s_1s_2\}+1/2$ by secure computation using the secret sharing value $\{si\}$ and outputs the secret sharing value $\{y\}$; and
> a second XOR operation step in which a second XOR operation unit calculates a secret sharing value $\{y_r\} = \{4rs_0s_1s_2\}+\{r\}/2$ by secure computation using a secret sharing value $\{r\}$ of a random number r and the secret sharing value $\{si\}$ and outputs the secret sharing value $\{y_r\}$.

6. The secure computation method according to Claim 5, wherein
j = 0, 1, 2 holds, the secure computation apparatus is a secure computation apparatus $P_j$ which is any one of three secure computation apparatuses $P_0$, $P_1$, and $P_2$, and the secret sharing value $\{x_i\}$ for the secure computation apparatus $P_j$ is $\{x_i\}_j$,
the secure computation method further comprises a random number obtaining step in which a random number obtaining unit obtains a secret sharing value $\{w\}^B_j = (w_j, w_{(j+1) \bmod 3})$ that satisfies $w = w_0+w_1+w_2$ mod 2 for a random number $w \in \{0, 1\}$, and
$\{x_j\}_j = (w_j, 0)$, $\{x_{(j+1) \bmod 3}\}_j = (0, w_{(j+1) \bmod 3})$, and $\{x_{(j+2) \bmod 3}\}_j = (0, 0)$ hold.

7. A program for making a computer function as the secure computation apparatus according to any one of Claims 1 to 4.

8. A computer-readable recording medium in which a program for making a computer function as the secure computation apparatus according to any one of Claims 1 to 4 is stored.

FIG. 1

(21-j)
11-j

111-j

INPUT
UNIT

112-j

OUTPUT
UNIT

114-j

CONTROL
UNIT

(216-j)
116-j

(215-j)

RANDOM NUMBER
OBTAINING UNIT

SUBTRACTION
UNIT

117-j

XOR
OPERATION
UNIT

118-j

XOR
OPERATION
UNIT

113-j

STORAGE

(219-j)

SETTING
UNIT

FIG. 2

FIG. 3

**INTERNATIONAL SEARCH REPORT**

| International application No. |
| --- |
| PCT/JP2019/007172 |

A. CLASSIFICATION OF SUBJECT MATTER
Int.Cl. G09C1/00(2006.01)i
According to International Patent Classification (IPC) or to both national classification and IPC

B. FIELDS SEARCHED

Minimum documentation searched (classification system followed by classification symbols)
Int.Cl. G09C1/00

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2016/042693 A1 (NEC CORP.) 24 March 2016, paragraphs [0016], [0017], [0070]-[0075] & US 2017/0278433 A1, paragraphs [0016], [0017], [0082]-[0094] | 1-8 |
| A | WO 2012/121333 A1 (NIPPON TELEGRAPH AND TELEPHONE CORP.) 13 September 2012, paragraphs [0032]-[0037] & US 9064123 B2, column 9, lines 20-64 & EP 2667370 A1 & CN 103403781 A | 1-8 |
| A | JP 2011-199821 A (NIPPON TELEGRAPH AND TELEPHONE CORP.) 06 October 2011, paragraphs [0035]-[0038] (Family: none) | 1-8 |
| A | JP 2006-301310 A (NIPPON TELEGRAPH AND TELEPHONE CORP.) 02 November 2006, paragraph [0022] (Family: none) | 1-8 |

☐ Further documents are listed in the continuation of Box C.          ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 13 May 2019 (13.05.2019) | 21 May 2019 (21.05.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014112548 A
- JP 2016173533 A
- JP 2016173532 A
- JP 2016173531 A
- JP 2016156853 A

### Non-patent literature cited in the description

- **KOJI CHIDA ; KOKI HAMADA ; DAI IKARASHI ; KATSUMI TAKAHASHI.** A Three-Party Secure Function Evaluation with Lightweight Verifiability Revisited. *CSS,* 2010
- **RONALD CRAMER ; IVAN DAMGARD ; YUVAL ISHAI.** Share conversion, pseudorandom secret-sharing and applications to secure distributed computing. *Theory of Cryptography,* 2005, 342-362